# EUROPEAN PATENT APPLICATION

(11) **EP 4 668 155 A1**
(43) Date of publication of application: **24.12.2025**
(21) Application number: 25183829.8
(22) Date of filing: 18.06.2025
(51) Int. Cl.: G06F 30/23, G06F 30/28, G06F 30/25

(54) **REDUCING ARTIFICIAL COMPRESSIBILITY IN DIGITAL INTERNAL FLUID FLOW SIMULATIONS**

(30) Priority: 21.06.2024 US 202418749798
(71) Applicant: Dassault Systemes Americas Corp., Waltham, MA 02451 (US)
(72) Inventor: WANG, Junye, Waltham, 02451 (US); FAN, Hongli, Waltham, 02451 (US); OTOMO, Hiroshi, Waltham, 02451 (US); ZHANG, Raoyang, Waltham, 02451 (US); CHEN, Hudong, Waltham, 02451 (US); YANG, Jingjing, Waltham, 02451 (US)
(74) Representative: Fish & Richardson P.C.

(57) **Abstract**

Systems and methods for digitally simulating a fluid flow in a three-dimensional computer-aided design (CAD) model of a simulation space include receiving a digital representation of a simulation space based on a digital three-dimensional CAD model. The digital representation includes a plurality of voxels. A first fluid flow is digitally simulated by applying a driving force to the plurality of voxels in the digital representation of the simulation space to generate a pressure field. A volumetric body force is determined to apply to the plurality of voxels based on a pressure gradient of the pressure field. A second fluid flow is digitally simulated by applying the volumetric body force to the plurality of voxels.

## Description

### CROSS REFERENCE TO RELATED APPLICATIONS

This application claims the benefit of U.S. Patent Application No. 18/749,798, filed on June 21, 2024, which is incorporated herein by reference in its entirety.

### BACKGROUND

This description relates to simulating physical processes, e.g., fluid flow.

Fluid flow can be simulated by generating discretized solutions of the Navier-Stokes differential equations by performing high-precision floating point arithmetic operations at each of many discrete spatial locations on variables representing the macroscopic physical quantities (e.g., density, temperature, flow velocity). Another approach replaces the differential equations with what is generally known as lattice gas (or cellular) automata, in which the macroscopic-level simulation provided by solving the Navier-Stokes equations is replaced by a microscopic-level model that performs operations on particles moving between sites on a lattice.

### SUMMARY

Compressible fluid flow solvers (e.g., Lattice Boltzmann Model (LBM) solvers) can be used to digitally simulate and study fluid flow in the automotive, aerospace, and energy industries. LBM solvers can have high robustness, accuracy, scalability, and versatility enabling LBM solvers to be used in many disparate scenarios to simulate fluid flow in and around physical objects with arbitrarily complex geometries. For example, LBMs can be applied to internal fluid flows having a tortuous structure such as porous media (e.g., carbonate rock cores) or a gas diffusion layer (GDL) of a fuel cell.

When generating a digital representation of a physical object or system for a fluid flow simulation, configuration parameters (e.g., dimensionless numbers) are chosen for the digital representation to match the physical object or system. Ideally, all of the configuration parameters would correspond exactly with the physical parameters; however, in practice, assumptions are made and/or parameters are adjusted to reduce computational cost and time. For example, when simulating an internal fluid flow through a pipe, the Mach number (a ratio of the flow velocity to the speed of sound of the fluid) of the flow can be very small requiring perhaps millions of timesteps to perform the simulation, which can be prohibitive. Instead, the Mach number can be artificially increased for the simulation to decrease the number of time steps and reduce the computational resources needed for the simulation. Unintended consequences can arise from artificially increasing the Mach number such as introduction of compressibility effects (e.g., artificial compressibility) for incompressible fluid flows. The artificial compressibility effects decrease the accuracy and quality of the simulation results.

This disclosure describes an approach for simulating an internal fluid flow with a compressible flow solver. To combat artificial compressibility effects, a data processing system can determine a conformal body force to drive the internal fluid flow to decouple pressure and density terms. The data processing system can determine the conformal body force by performing a first simulation (e.g., a preparatory simulation) using an artificially elevated Mach number. The conformal body force can be determined based on the pressure gradient from the preparatory simulation. The data processing system can perform a second simulation (e.g., a main simulation) of the fluid flow where the conformal body force is applied to drive the fluid flow.

In an example implementation, a computer system for digitally simulating a fluid flow in a three-dimensional computer-aided design (CAD) model of a simulation space includes one or more processors; and a memory including: a mesh preparation engine for generating and storing a digital representation of a simulation space based on a digital three-dimensional CAD model, the digital representation including a mesh comprising a plurality of voxels; and a simulation engine for reading, from the mesh preparation engine, the digital representation of the mesh in the simulation space. The simulation engine stores instructions for digitally simulating a fluid flow, the instructions, when executed by the one or more processors, cause the one or more processors to perform operations including: reading, from the mesh preparation engine, the digital representation of the mesh in the simulation space; digitally simulating a first fluid flow by applying a driving force to the plurality of voxels in the digital representation of the mesh in the simulation space to generate a digital pressure field; determining a digital volumetric body force to apply to the plurality of voxels based on a pressure gradient of the digital pressure field; and digitally simulating a second fluid flow by applying the digital volumetric body force to the plurality of voxels.

In another example implementation, a method implemented by a data processing system for digitally simulating a fluid flow in a three-dimensional CAD model of a simulation space includes receiving, by a data processing system, a digital representation of a simulation space based on a digital three-dimensional CAD model, the digital representation including a plurality of voxels; digitally simulating, by the data processing system, a first fluid flow by applying a driving force to the plurality of voxels in the digital representation of the simulation space to generate a pressure field; determining, by the data processing system, a volumetric body force to apply to the plurality of voxels based on a pressure gradient of the pressure field; and digitally simulating, by the data processing system, a second fluid flow by applying the volumetric body force to the plurality of voxels.

In another example implementation, one or more non-transitory machine-readable storage devices store instructions for digitally simulating a fluid flow in a three-dimensional CAD model of a simulation space, the instructions being executable by one or more processors, to cause performance of operations including receiving a digital representation of a simulation space based on a digital three-dimensional CAD model, the digital representation including a plurality of voxels; digitally simulating a first fluid flow by applying a driving force to the plurality of voxels in the digital representation of the simulation space to generate a pressure field; determining a volumetric body force to apply to the plurality of voxels based on a pressure gradient of the pressure field; and digitally simulating a second fluid flow by applying the volumetric body force to the plurality of voxels.

In an aspect combinable with one, some, or all of the example implementations, the first fluid flow and the second fluid flow include incompressible, steady state fluid flows.

In another aspect combinable with one, some, or all of the previous aspects, the digital volumetric body force includes a digital conformal volumetric body force aligned with a streamwise direction.

In another aspect combinable with one, some, or all of the previous aspects, a density variation of the second fluid flow is less than a density variation of the first fluid flow.

Another aspect combinable with one, some, or all of the previous aspects includes determining a realized pressure force for the second fluid flow based on the driving force from the first fluid flow and a measured pressure force from the second fluid flow.

In another aspect combinable with one, some, or all of the previous aspects, a number of voxels used in simulating the first fluid flow is different than a number of voxels used in simulating the second fluid flow.

Another aspect combinable with one, some, or all of the previous aspects includes storing the pressure field and the volumetric body force in a hardware storage device for use in subsequent simulations of fluid flow.

In another aspect combinable with one, some, or all of the previous aspects, the pressure field includes a force balance based on the driving force, fluid inertia, and friction forces at solid boundaries in the simulation space.

Another aspect combinable with one, some, or all of the previous aspects includes storing in the memory, the digital pressure field generated by digitally simulating the first fluid flow by applying the driving force to the plurality of voxels in the digital representation of the mesh in the simulation space; storing in the memory the digital volumetric body force to apply to the plurality of voxels, the digital volumetric body force determined based on the pressure gradient of the digital pressure field; and storing in the memory results of a digital simulation of the second fluid flow generated by digitally simulating the second fluid flow by applying the digital volumetric body force to the plurality of voxels.

One or more of the above aspects may provide one or more of the advantages disclosed herein. This approach reduces computational complexity and the computational resources needed to simulate incompressible fluid flows. This approach corrects for artificially generated compressibility of fluids in internal flow simulations when using high simulation Mach numbers. The high simulation Mach number enables fewer timesteps to be used to perform the simulation thereby reducing the number of computations necessary to simulate the fluid flow. A compressible fluid solver uses fewer computations than an incompressible fluid solver because the compressible fluid solve does not iterate steps nor solve numerous sets of linear equations to determine the pressure field of the fluid flow. This approach both reduces computational steps, and consequently computational resources needed, and enables the simulation to be parallelized on a parallel computing system.

This reduction in computational complexity conserves computing resources because less processing power is needed to perform the computation, relative to an amount of processing power needed for more complex computations. This reduction in computational complexity also increases the speed at which a processing device performs the computation. Generally, processing power includes an ability of a computer (or processing device) to process data. This approach improves the accuracy of incompressible fluid flow simulations by decoupling the density and pressure by applying a conformal body force to voxels of the simulation grid to reduce artificially generated compressibility. The conformal body force can be adapted for different magnitudes of boundary settings, such as different pressure driving forces, by changing a global factor of the conformal body force. The reusability of the conformal body force is advantageous because it improves computational efficiency for future digital simulations.

Other features and advantages of this approach will be apparent from the following detailed description and from the claims.

### BRIEF DESCRIPTION OF THE DRAWINGS

FIG. 1 depicts a system for digital simulations of fluid flows.
FIG. 2A depicts a flow chart showing operations for formulation of a Lattice Boltzmann Model simulation.
FIG. 2B depicts a flow chart for a method of reducing effects of artificial compressibility in an internal fluid flow simulation.
FIGS. 3 and 4 illustrate velocity components of two LBMs represented in Euclidean space (prior art).
FIG. 5 is a flow chart of a procedure followed by a physical process simulation system using corrected computer-aided-design (CAD) drawings.
FIG. 6 is a perspective view of a microblock (prior art).
FIGS. 7A - 7B are illustrations of lattice structures used by the system of FIG. 1 (prior art).
FIGS. 8 and 9 each illustrate variable resolution techniques (prior art).
FIG. 10 illustrates movement of particles (prior art).
FIG. 11 illustrates regions affected by a facet of a surface (prior art).
FIG. 12 illustrates movement of particles from a surface to a surface (prior art).
FIG. 13 is a flow chart of a procedure for performing surface dynamics.
FIGS. 14A-14F show simulation results for a pressure driven water flow through the bipolar channel of a fuel cell.

The details of one or more embodiments of the invention are set forth in the accompanying drawings and the description below. Other features, objects, and advantages of the invention are apparent from the description and drawings, and from the claims.

### DESCRIPTION

One method for simulating fluid flows is the so-called Lattice Boltzmann method. LBM-based simulations have many advantages including robustness, compatibility with multi-phase and multi-component flow, localized computation, high scalability, and grid independent solutions. In an LBM-based physical process simulation system, fluid flow is represented by distribution function values, evaluated at a set of discrete velocities using the well-known Lattice Boltzmann equation that describes the time-evolution of the distribution function. The distribution function involves two processes, a streaming process and a collision process.

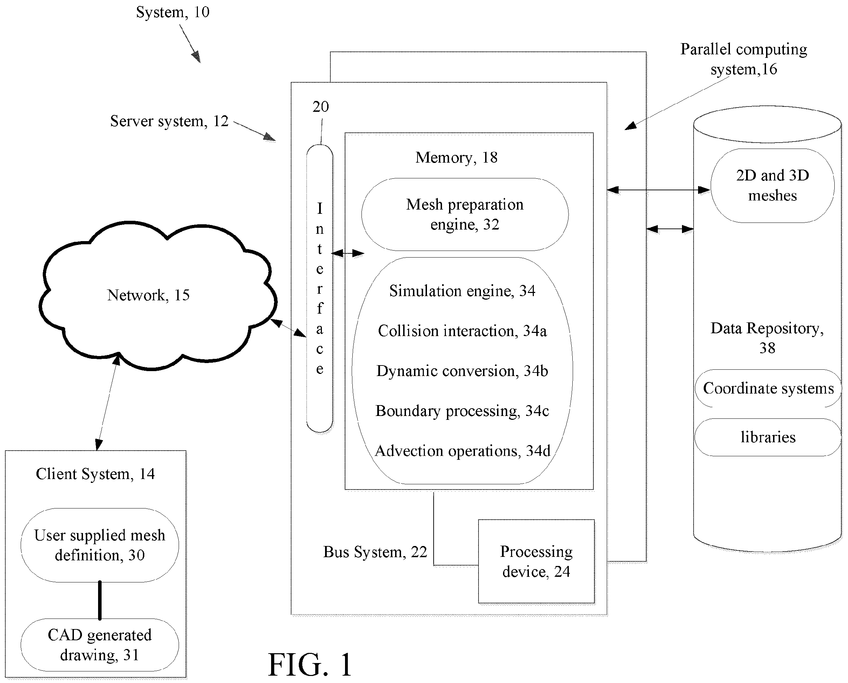

FIG. 1 illustrates a schematic of an example data processing system 10 that executes a Lattice Boltzmann (LB) based simulation. The system 10 in this implementation is based on a client-server or cloud-based architecture and includes a server system 12 implemented as a massively parallel computing system 16 (stand alone or cloud-based) and a client system 14 coupled via a network 15. The server system 12 includes memory 18, a bus system 22, interfaces 20 (e.g., user interfaces/network interfaces/display or monitor interfaces, etc.) and a processing device 24. In memory 18 are a mesh preparation engine 32 and a simulation engine 34.

While FIG. 1 shows mesh preparation engine 32 in memory 18, the mesh preparation engine can be a third-party application that is executed on a different system than server 12. Whether mesh preparation engine 32 executes in memory 18 or is executed on a different system than server 12, mesh preparation engine 32 receives a user-supplied mesh definition 30 based on CAD generated drawings 31 and then prepares a mesh and sends (and/or stores) the prepared mesh to simulation engine 34.

Simulation engine 34 includes collision interaction module 34a, which includes surface dynamics conversion 34b, boundary processing module 34c, and advection operations 34d. System 10 accesses data repository 38, which stores 2D and/or 3D meshes (Cartesian and/or curvilinear), coordinate systems, and libraries.

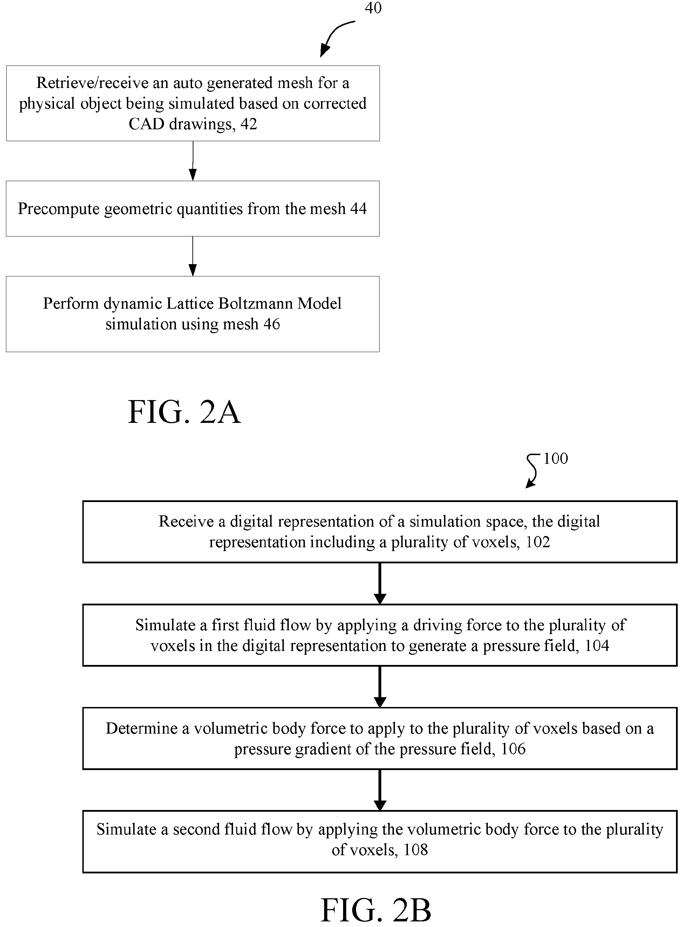

Referring to FIG. 2A, a process 40 for simulating fluid flow through a representation of a physical object is shown. Examples of physical objects include porous media (such as carbonate rock), pipe systems, GDL of a fuel cell, etc. The physical object can be of any shape and, in particular, can have planar and/or curved surface(s). Process 40 receives 42, e.g., from client system 14 or retrieves from data repository 38, a mesh (or grid) for the physical object being simulated. In other embodiments, either an external system or the server 12 based on user input, generates the mesh for the physical object being simulated. The process precomputes 44 geometric quantities from the retrieved mesh and performs a dynamic Lattice Boltzmann Model simulation 46 using the precomputed geometric quantities corresponding to the retrieved mesh. Lattice Boltzmann Model simulation includes the simulation 46 of the evolution of particle distributions that includes the surface dynamics conversion, boundary modeling, and advection of particles to a next cell in the LBM mesh.

Compressible fluid flow solvers such as LBM solvers can be used to digitally simulate fluid flows with high robustness, accuracy, scalability, and versatility enabling LBM solvers to be used in many disparate scenarios to simulate fluid flow in and around physical objects with arbitrarily complex geometries.

When generating a digital representation of a physical object and a fluid flow configuration associated with the physical object dimensionless numbers such as the Reynolds number (ratio of inertial forces to viscous forces), Bond number (ratio of gravitational forces and surface tension forces), and Mach Number (ratio of flow velocity and speed of sound in a fluid) can be used to characterize the fluid forces governing the fluid dynamics. Dimensionless numbers are particularly useful for scaling the fluid dynamics to match between various length scales, fluid properties, and flow velocities. Ideally, the dimensionless numbers can be matched without assuming the governing dynamics. In most cases, however, this can be very difficult to achieve due to computer resource limitations. For example, to simulate a water flow of 0.8 m/sec through a circular pipe of 1m length and 0.01m radius, the Mach number is 5.33e-4. At this Mach number, it would require 1-2 million timesteps to pass the flow through the pipe where the radius and sound speeds are 10 grids (e.g., each voxel in the digital representation has an edge length of 0.001m) and 1.0 grid per a timestep (e.g., each time step is 6.67e-7s). Such a small timestep can result in an unacceptably large computational cost. More complex geometry of the physical object further exacerbates this issue. A common workaround to resolve this issue is to increase the simulation Mach number within a reasonable range. However, increased simulation Mach number can result in increased numerical compressibility effects.

An increased simulation Mach number results in a higher fluid velocity, which in turn, results in higher friction forces and higher pressure variations throughout the pipe. In a compressible flow solver such as an LBM, the pressure of the fluid is related to the density. Higher pressure variations result in density variations not reflective of the real-world fluid flow. Excessive compressibility effects due to the increased simulation Mach number are problematic because the compressibility effects decrease the accuracy of fluid flow field predictions.

To overcome the artificial compressibility effects introduced by increasing the simulation Mach number, a conformal body force can be used to drive the fluid flow and decouple the density and pressure variations. The conformal body force can be generated to replicate the fluid flow dynamics of a pressure driven flow while significantly reducing the artificial compressibility effects. An appropriate conformal body force (e.g., a force acting on fluid elements along the streamwise direction of the fluid flow) can be developed using a two simulation approach, a preparation simulation and a main simulation. In the preparation simulation, a single-phase pressure driven only flow can be simulated to determine the pressure profile along the flow path. For example, the pressure profile can be determined by a force balance between the pressure force, inertia force, and the friction from the solid boundaries (e.g., pipe walls, pore walls). A volumetric conformal body force field is generated based on the pressure gradient of the pressure profile from the preparation simulation. In the main simulation, the previously generated conformal body force field can be applied to the fluid flow serving as the main driving force of the fluid in place of the pressure driving force. The resulting pressure force is represented by the volumetric conformal body force plus a density-dependent pressure force term. This decoupling can decrease the magnitude of the density-dependent pressure force term resulting in reduced density variation along the flow path thereby reducing the artificial compressibility effects.

Using this conformal volumetric body force approach to simulate incompressible fluid flows using a compressible fluid flow solver improves the accuracy of the fluid flow predictions compared to simulations with artificially increased Mach numbers alone. Concomitantly, this approach reduces computation costs by reducing the number of computations required to accurately simulate the fluid flow as compared with a simulation of the incompressible fluid flow at the actual fluid flow Mach number. This approach solves the compressible Navier-Stokes equation or an asymptotically equivalent equation.

FIG. 2B depicts a flow chart for a process 100 to simulate an internal fluid flow. A data processing system receives (102) a digital representation of a simulation space, the digital representation including a plurality of voxels. For example, the data processing system receives the digital representation from mesh preparation engine 32 or from data repository 38. In some implementations, the data processing system generates the digital representation of the simulation space based on CAD models or drawings representing a physical object.

The data processing system simulates (104) a first fluid flow by applying a driving force to the plurality of voxels in the digital representation of the simulation space to generate a pressure field. A driving force includes forces that cause the fluid to flow from one location to another location such as pressure, gravity, and inertial forces. The data processing system can apply boundary conditions reflective of real-world boundary conditions and run the simulation until the simulation results have converged. For example, the data processing system can simulate a pressure driven flow by applying a pressure driving force to the voxels in the simulation space.

The data processing system determines (106) a volumetric body force to apply to the plurality of voxels based on a pressure gradient of the pressure field. For example, the data processing system determines a conformal body force that acts in the streamwise direction of the fluid flow by determining a pressure gradient of the pressure field from the simulation of the first fluid flow. The data processing system can store the pressure field and the volumetric body force in a data repository or other hardware storage device to access at a later time.

The data processing system simulates (108) a second fluid flow by applying the volumetric body force to the plurality of voxels. The simulation of the first fluid flow and the simulation of the second fluid flow occur in the same geometry. In some implementations, the simulation of the first fluid flow and the simulation of the second fluid flow can have different resolutions (e.g., different numbers of voxels). For example, the first fluid flow can be simulated at a lower resolution than the second fluid flow. The volumetric body force can be upscaled or downscaled (e.g., through bicubic or linear interpolation) to the resolution of the second fluid flow. In some implementations, the data processing system scales the magnitude of the volumetric body force to achieve a desired fluid flow.

The data processing system can determine a realized pressure force for the second fluid flow based on the driving force from the first fluid flow and a measured pressure force from the second fluid flow. The measured pressure force can be a density-dependent pressure force. Both the first and second fluid flows can be incompressible, steady-state fluid flows.

In some implementations, the data processing system stores the volumetric body force and the pressure field in a hardware storage device for use in additional (e.g., subsequent) simulations of fluid flow that utilize the same geometry.

### Detailed Example

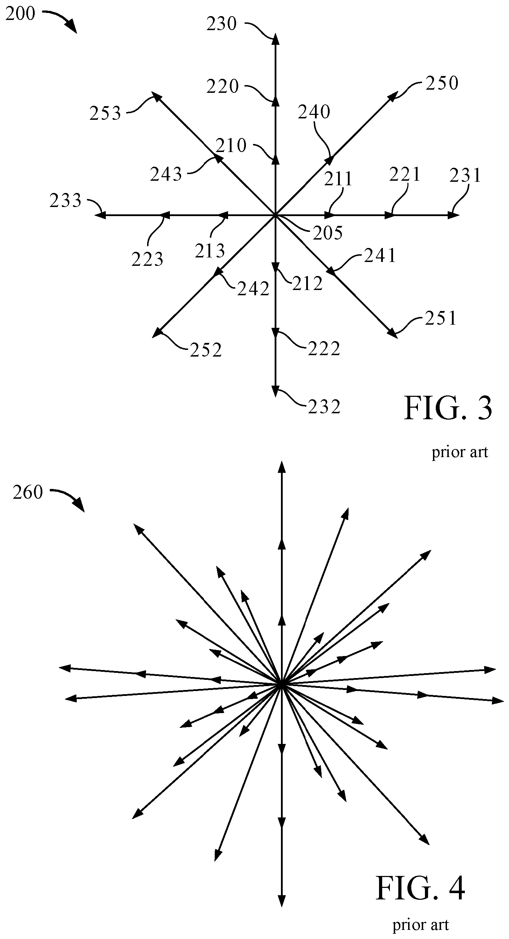

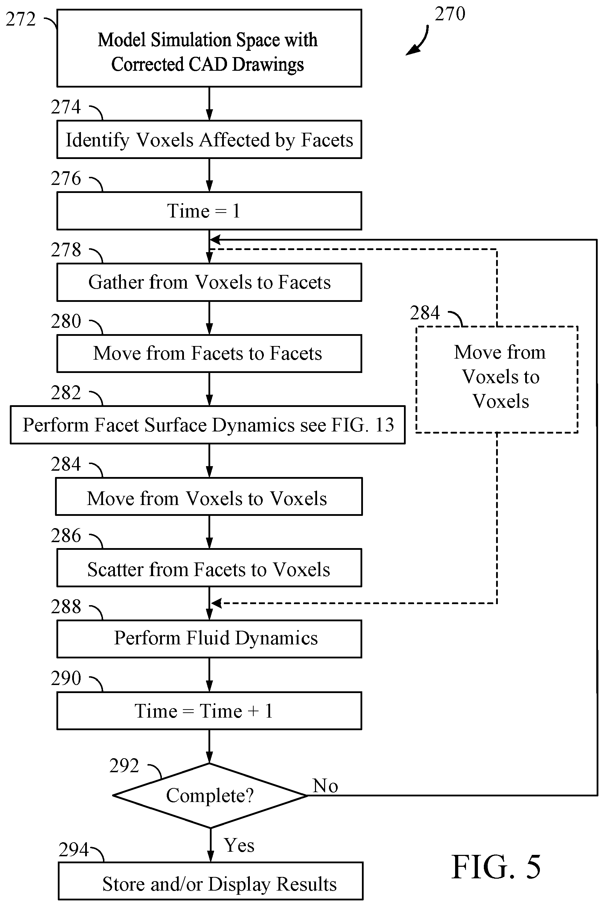

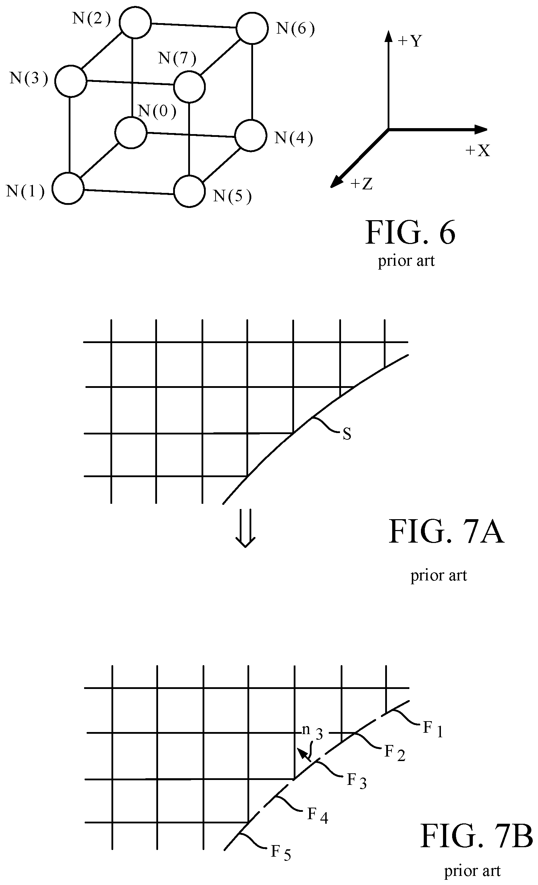

In the procedure discussed in FIG. 5 below, a flow simulation process is described using CAD drawings with the identified void space to configure a simulation space. In FIGS. 3 and 4 that precede and FIGS. 6, 7A, 7B, 8, 9, 10, 11 and 12, each of these figures are labeled as prior art because these figures appear in U.S. Patent 5,848,260 (the '260 patent) or U.S. Patent 11,847,391 (the '391 patent), both of which are hereby incorporated in their entirety.

However, the figures as they appear in the above patent do not take into consideration any modifications that would be made to a flow simulation to reduce effects of artificial compressibility because that process described herein is not described in the above referenced patents.

### Model Simulation Space

In an LBM-based physical process simulation system, fluid flow is represented by the distribution function values evaluated at a set of discrete velocities. The dynamics of the distribution function is governed by the Lattice Boltzmann equation which relates the change of the distribution due to the so-called "streaming process" to changes in the distribution function due to the "collision process" The streaming process is when a pocket of fluid starts out at a mesh location, and then moves along one of the plural velocity vectors to the next mesh location. At that point, the "collision factor," i.e., the effect of nearby pockets of fluid on the starting pocket of fluid, is calculated. The fluid can only move to another mesh location, so the proper choice of the velocity vectors is necessary so that all of the components of all of the velocities are multiples of a common speed. The collision process uses a "collision operator" to represent the change of the distribution function due to the collisions among the pockets of fluids. The particular form of the collision operator is of the Bhatnagar, Gross, and Krook (BGK) operator. The collision operator forces the distribution function to go to prescribed values.

The BGK operator is constructed according to the physical argument that, no matter what the details of the collisions, the distribution function approaches a well-defined local equilibrium via collisions, according to a characteristic relaxation time to reach equilibrium via collisions. Dealing with particles (e.g., atoms or molecules), the relaxation time is typically taken as a constant.

From this simulation, conventional fluid variables, such as mass and fluid velocity, are obtained based on simple summations of products of the distribution. Due to symmetry considerations, the set of velocity values are selected in such a way that they form certain lattice structures when spanned in the configuration space. The dynamics of such discrete systems obey the LBE, where the collision operator usually takes the BGK form as described above. By proper choice of the equilibrium distribution forms, it can be theoretically shown that the Lattice Boltzmann equation gives rise to correct hydrodynamics and thermo-hydrodynamics. That is, the hydrodynamic moments derived from the distribution function obey the Navier-Stokes equations in the macroscopic limit.

The collective values of the lattice velocities and the associated weights define an LBM. The LBM can be implemented, efficiently on scalable computer platforms and run with great robustness for time unsteady flows and complex boundary conditions.

A standard technique of obtaining the macroscopic equation of motion for a fluid system from the Boltzmann equation is the Chapman-Enskog method in which successive approximations of the full Boltzmann equation are taken. In a fluid system, a small disturbance of the density travels at the speed of sound. In a gas system, the speed of sound is generally determined by the temperature. The importance of the effect of compressibility in a flow is measured by the ratio of the characteristic velocity and the sound speed, which is known as the Mach number.

A general discussion of an LBM-based simulation system is provided below that includes the dynamic conversion 34b to conduct fluid flow simulations. For a further explanation of LBM-based physical process simulation systems, the reader is referred to the '260 patent.

Referring to FIG. 3, a first model (2D-1) 200 is a two-dimensional model that includes 21 velocities. Of these 21 velocities, one (205) represents particles that are not moving; three sets of four velocities represent particles that are moving at either a normalized speed (r) (210-213), twice the normalized speed (2r) (220-223), or three times the normalized speed (3r) (230-233) in either the positive or negative direction along either the *x* or *y* axis of the lattice; and two sets of four velocities represent particles that are moving at the normalized speed (r) (240-243) or twice the normalized speed *(2r)* (250-253) relative to both of the *x* and *y* lattice axes.

Referring to FIG. 4, illustrated is a second model (3D-1) 260 - a three-dimensional model that includes 39 velocities where each velocity is represented by one of the arrowheads of FIG. 4. Of these 39 velocities, one represents particles that are not moving; three sets of six velocities represent particles that are moving at either a normalized speed (*r*), twice the normalized speed (2*r*), or three times the normalized speed (3*r*) in either the positive or negative direction along the *x, y* or *z* axis of the lattice; eight represent particles that are moving at the normalized speed *(r)* relative to all three of the *x, y, z* lattice axes; and twelve represent particles that are moving at twice the normalized speed *(2r)* relative to two of the *x, y, z* lattice axes.

More complex models, such as a 3D-2 model, which includes 101 velocities, and a 2D-2 model, which includes 37 velocities, may also be used. For the three-dimensional model 3D-2, of the 101 velocities, one represents particles that are not moving (Group 1); three sets of six velocities represent particles that are moving at either a normalized speed (*r*), twice the normalized speed (2*r*), or three times the normalized speed (3*r*) in either the positive or negative direction along the *x, y* or *z* axis of the lattice (Groups 2, 4, and 7); three sets of eight represent particles that are moving at the normalized speed *(r),* twice the normalized speed *(2r),* or three times the normalized speed (3r) relative to all three of the *x, y, z* lattice axes (Groups 3, 8, and 10); twelve represent particles that are moving at twice the normalized speed (2r) relative to two of the *x, y, z* lattice axes (Group 6); twenty four represent particles that are moving at the normalized speed *(r)* and twice the normalized speed *(2r)* relative to two of the *x, y, z* lattice axes, and not moving relative to the remaining axis (Group 5); and twenty four represent particles that are moving at the normalized speed *(r)* relative to two of the *x, y, z* lattice axes and three times the normalized speed (3*r*) relative to the remaining axis (Group 9).

For the two-dimensional model 2D-2, of the 37 velocities, one represents particles that are not moving (Group 1); three sets of four velocities represent particles that are moving at either a normalized speed *(r),* twice the normalized speed *(2r),* or three times the normalized speed (3*r*) in either the positive or negative direction along either the *x* or *y* axis of the lattice (Groups 2, 4, and 7); two sets of four velocities represent particles that are moving at the normalized speed *(r)* or twice the normalized speed *(2r)* relative to both of the *x* and *y* lattice axes; eight velocities represent particles that are moving at the normalized speed (*r*) relative to one of the *x* and *y* lattice axes and twice the normalized speed *(2r)* relative to the other axis; and eight velocities represent particles that are moving at the normalized speed (*r*) relative to one of the *x* and *y* lattice axes and three times the normalized speed (3*r*) relative to the other axis.

The LB models described above provide a specific class of efficient and robust discrete velocity kinetic models for numerical simulations of flows in both two-and three-dimensions. A model of this kind includes a particular set of discrete velocities and weights associated with those velocities. The velocities coincide with grid points of Cartesian coordinates in velocity space which facilitates accurate and efficient implementation of discrete velocity models, particularly the kind known as the Lattice Boltzmann models. Using such models, flows can be simulated with high fidelity.

Referring to FIG. 5, a physical process simulation system that operates according to a procedure 270 to simulate a physical process such as fluid flow is described. Prior to the flow simulation, a simulation space is modeled (272) using CAD drawings as discussed above, as a collection of voxels. The simulation space is generated using a computer-aided-design (CAD) program and the gap correction processing of the CAD generated drawings. For example, a CAD program could be used to draw an air foil positioned in a wind tunnel.

The resolution of the lattice may be selected based on the Reynolds number of the system being simulated. The Reynolds number is related to the viscosity of the flow, the characteristic length of an object in the flow, and the characteristic velocity of the flow.

The characteristic length of an object represents large scale features of the object. For example, if flow around a micro-device were being simulated, the height of the micro-device might be considered to be the characteristic length. When flow around small regions of an object (e.g., the side mirror of an automobile) is of interest, the resolution of the simulation may be increased, or areas of increased resolution may be employed around the regions of interest. The dimensions of the voxels decrease as the resolution of the lattice increases.

The state space is represented as the distribution function of particles or particles per unit volume in a given state at a lattice site denoted by a spatial vector at a given time. The number of states is determined by the number of possible velocity vectors within each energy level. The velocity vectors are integer linear speeds in a space having three dimensions: *x, y,* and *z*. The number of states is increased for multiple-species simulations. Each state represents a different velocity vector at a specific energy level (i.e., energy level zero, one or two). The velocity of each state is indicated with its "speed" in each of the three dimensions.

The energy level zero state represents stopped particles that are not moving in any dimension, i.e., the speed of the particles in each dimension is zero. Energy level one states represents particles having a ±1 speed in one of the three dimensions and a zero speed in the other two dimensions. Energy level two states represent particles having either a ±1 speed in all three dimensions, or a ±2 speed in one of the three dimensions and a zero speed in the other two dimensions.

Generating all of the possible permutations of the three energy levels gives a total of 39 possible states (one energy zero state, 6 energy one states, 8 energy three states, 6 energy four states, 12 energy eight states and 6 energy nine states.). Each voxel (i.e., each lattice site) is represented by a state vector. The state vector completely defines the status of the voxel and includes 39 entries. The 39 entries correspond to the one energy zero state, 6 energy one states, 8 energy three states, 6 energy four states, 12 energy eight states and 6 energy nine states. By using this velocity set, the system can produce Maxwell-Boltzmann statistics for an achieved equilibrium state vector.

For processing efficiency, the voxels are grouped in 2x2x2 volumes called microblocks. The microblocks are organized to permit parallel processing of the voxels and to minimize the overhead associated with the data structure.

A microblock is illustrated in FIG. 6. The voxels are represented at the corners of the microblock.

Referring to FIGS. 7A and 7B, a surface S (FIG. 7A) is represented in the simulation space (FIG. 7B) as a collection of facets F_{α}, where α is an index that enumerates a particular facet. A facet is not restricted to the voxel boundaries but is typically sized on the order of or is slightly smaller than the size of the voxels adjacent to the facet so that the facet affects a relatively small number of voxels. Properties are assigned to the facets for the purpose of implementing surface dynamics. In particular, each facet *F_{α}* has a unit normal (*n_{α}*), a surface area (*A_{α}*)*,* a center location (*x_{α}*), and a facet distribution function (*fᵢ(α)*) that describes the surface dynamic properties of the facet. The total energy distribution function is treated in the same way as the flow distribution for facet and voxel interaction.

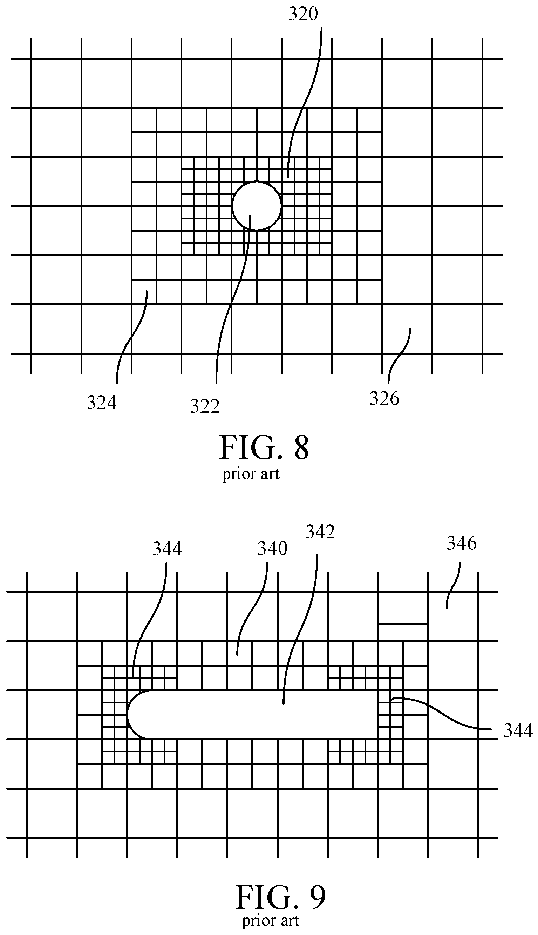

Referring to FIG. 8, different levels of resolution may be used in different regions of the simulation space to improve processing efficiency. Typically, the region 320 around an object 322 is of the most interest and is therefore simulated with the highest resolution. Because the effect of viscosity decreases with distance from the object, decreasing levels of resolution (i.e., expanded voxel volumes) are employed to simulate regions 324, 326 that are spaced at increasing distances from the object 322.

Similarly, as illustrated in FIG. 9, a lower level of resolution may be used to simulate a region 340 around less significant features of an object 342 while the highest level of resolution is used to simulate regions 344 around the most significant features (e.g., the leading and trailing surfaces) of the object 342. Outlying regions 346 are simulated using the lowest level of resolution and the largest voxels.

### C. Identify Voxels Affected By Facets

Referring again to FIG. 5, once the simulation space has been modeled (272), voxels affected by one or more facets are identified (274). Voxels may be affected by facets in a number of ways. First, a voxel that is intersected by one or more facets is affected in that the voxel has a reduced volume relative to non-intersected voxels. This occurs because a facet, and material underlying the surface represented by the facet, occupies a portion of the voxel. A fractional factor indicates the portion of the voxel that is unaffected by the facet (i.e., the portion that can be occupied by a fluid or other materials for which flow is being simulated). For non-intersected voxels the fractional factor equals one.

Voxels that interact with one or more facets by transferring particles to the facet or receiving particles from the facet are also identified as voxels affected by the facets. All voxels that are intersected by a facet will include at least one state that receives particles from the facet and at least one state that transfers particles to the facet. In most cases, additional voxels also will include such states.

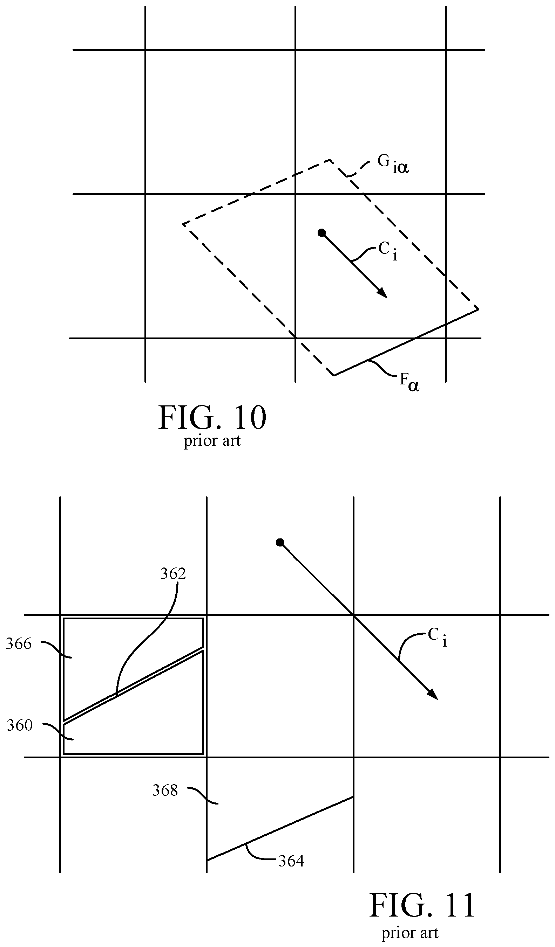

Referring to FIG. 10, for each state *i* having a non-zero velocity vector *cᵢ,* a facet *F_{α}* receives particles from, or transfers particles to, a region defined by a parallelepiped *G_{iα}* having a height defined by the magnitude of the vector dot product of the velocity vector *cᵢ* and the unit normal *n_{α}* of the facet and a base defined by the surface area *A_{α}* of the facet so that the volume *V_{iα}* of the parallelepiped *G_{iα}* equals the base times the height.

The facet *F_{α}* receives particles from the volume *V_{iα}* when the velocity vector of the state is directed toward the facet, and transfers particles to the region when the velocity vector of the state is directed away from the facet. As will be discussed below, this relationship is modified when another facet occupies a portion of the parallelepiped *G_{iα},* a condition that could occur in the vicinity of non-convex features of a surface such as interior corners.

The parallelepiped *G_{iα}* of a facet *F_{α}* may overlap portions or all of multiple voxels. The number of voxels or portions thereof is dependent on the size of the facet relative to the size of the voxels, the energy of the state, and the orientation of the facet relative to the lattice structure. The number of affected voxels increases with the size of the facet. Accordingly, the size of the facet, as noted above, is typically selected to be on the order of or smaller than the size of the voxels located near the facet.

The flux of particles for a given state that move between a voxel and a facet *F_{α}* equals the density of the particles of the state in the voxel multiplied by the volume of the region of overlap with the voxel.

When the parallelepiped G_{iα} is intersected by one or more facets, the volume of the parallelepiped *V_{iα}* is equal to the summation of the volumes associated with each of the voxels overlapped by *G_{iα}* and the summation of the volumes associated with all of the facets that intersect *G_{iα}.*

### D. Perform Simulation

Referring to FIG. 5, once the voxels that are affected by one or more facets are identified (274), a timer is initialized to begin the simulation (276). During each time increment of the simulation, movement of particles from voxel to voxel is simulated by an advection stage (278-286) that accounts for interactions of the particles with surface facets. Next, a collision stage (288) simulates the interaction of particles within each voxel. Thereafter, the timer is incremented (290). If the incremented timer does not indicate that the simulation is complete (292), the advection and collision stages (278-288) are repeated. If the incremented timer indicates that the simulation is complete (292), results of the simulation are stored and/or displayed (294).

### 1. Boundary Conditions For Surface

To correctly simulate interactions with a surface, each facet meets four boundary conditions. First, the combined mass of particles received by a facet equals the combined mass of particles transferred by the facet (i.e., the net mass flux to the facet equals zero). Second, the combined energy of particles received by a facet equals the combined energy of particles transferred by the facet (i.e., the net energy flux to the facet equals zero). These two conditions may be satisfied by requiring the net mass flux at each energy level (i.e., energy levels one and two) to equal zero.

The other two boundary conditions are related to the net momentum of particles interacting with a facet. For a surface with no skin friction, referred to herein as a slip surface, the net tangential momentum flux equals zero and the net normal momentum flux equals the local pressure at the facet. Thus, the components of the combined, received, and transferred momentums that are perpendicular to the normal n_{α} of the facet (i.e., the tangential components) are equal, while the difference between the components of the combined, received, and transferred momentums that are parallel to the normal n_{α} of the facet (i.e., the normal components) equals the local pressure at the facet. For non-slip surfaces, friction of the surface reduces the combined tangential momentum of particles transferred by the facet relative to the combined tangential momentum of particles received by the facet by a factor that is related to the amount of friction.

### 2. Gather From Voxels to Facets

Simulating interaction between particles and a surface, particles are gathered from the voxels and provided to the facets (278). As noted above, the flux of particles between a voxel and a facet for a given state is related to the overlap of the parallelepiped of the facet and the voxel for the given state. Only voxels for which parallelepiped has a non-zero value are summed. As noted above, the size of the facets is selected so that the parallelepiped volumes for the facets have a non-zero value for only a small number of voxels. The volume of the parallelepipeds and the flux of particles can have non-integer values, and thus a data processing system stores and processes these quantities as real numbers.

### 3. Move From Facet to Facet

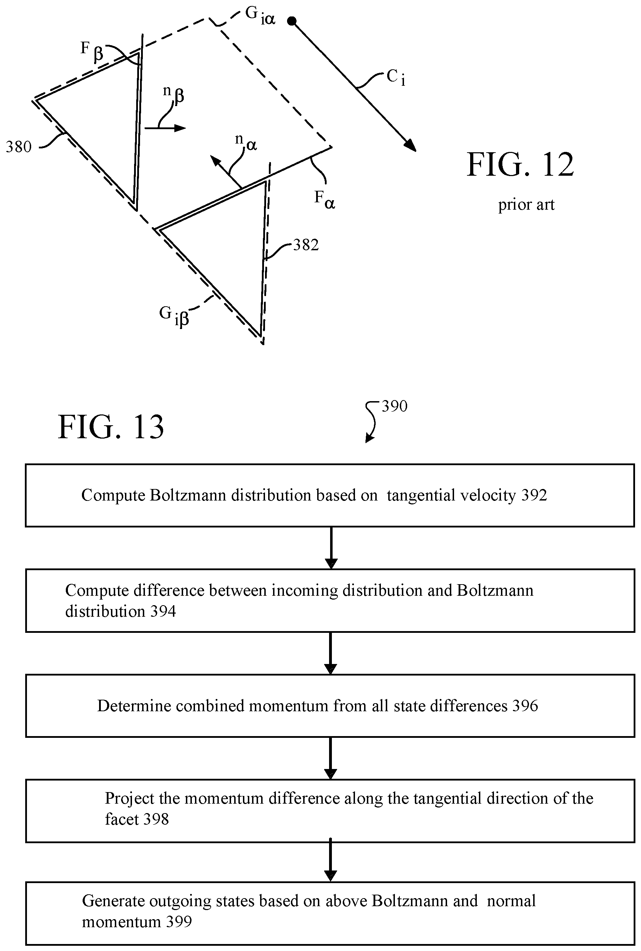

Next, particles are moved between facets (280). If the parallelepiped *G_{iα}* for an incoming state of a facet *F_{α}* is intersected by another facet *F_{β},* then a portion of the particles for the incoming state received by the facet *F_{α}* will come from the facet *F_{β}.* In particular, facet *F_{α}* will receive a portion of the particles for the given state produced by facet *F_{β}* during the previous time increment. This relationship is illustrated in FIG. 12, where a portion 380 of the parallelepiped *G_{iα}* that is intersected by facet F_{β} equals a portion 382 of the parallelepiped *G_{iβ}* that is intersected by facet *F_{α}*. For each state directed toward a facet *F_{α}*, the number of particles provided to the facet *F_{α}* by the other facets is equal to the flux of particles from the other facets from the previous time step multiplied by the ratio of the overlapping volume between parallelepipeds of the other facets and the facet *F_{α}* for a given state and the total volume of the parallelepiped for the facet *F_{α}* for that state.

The total flux of particles for the given state into the facet *F_{α}* is equal to the sum of the particles from all of the voxels overlapping the parallelepipeds of the facet and the sum of the fluxes from all of the facets that have parallelepiped volumes overlapping with the parallelepiped volumes of the facet *F_{α}*. The state vector for the facet, also referred to as a facet distribution function, has a number of entries corresponding to the number entries of the voxel states vectors, where the number of entries is the number of discrete lattice speeds in the LBM. The input states of the facet distribution function are set equal to the flux of particles into those states divided by the volume *V_{iα}*.

The facet distribution function is a simulation tool for generating the output flux from a facet and is not necessarily representative of actual particles. To generate an accurate output flux, values are assigned to the other states of the distribution function. Outward states are populated using the technique described above for populating the inward states. In an alternative approach, the flux from states other than incoming states may be generated using values of the outward flux from the previous time step.

For parallel states (e.g., states with velocities parallel to the facet), the volume of the associated parallelepiped is zero. The facet distribution function for parallel states is determined as the limit of the facet distribution function as the volume of the parallelepiped and any overlapping parallelepipeds approach zero. The values of states having zero velocity (i.e., rest states and states (0, 0, 0, 2) and (0, 0, 0, -2)) are initialized at the beginning of the simulation based on initial conditions for temperature and pressure. These values are then adjusted over time.

### 4. Perform Facet Surface Dynamics

Next, surface dynamics are performed 282 for each facet to satisfy the boundary conditions. A procedure 390 for performing surface dynamics for a facet is illustrated in FIG. 13.

The velocity and densities are sampled from the voxel to the facet *F_{α}*, during the gather step 278 (FIG. 5). The velocity is then projected along the surface. The Boltzmann Equilibrium distribution is computed (392) based on the sampled density and projected velocity, and the density and velocity are scaled to satisfy the constraints. The resulting density and velocity are then used to compute the new Boltzmann Equilibrium distribution (392). The difference between the incoming distribution and the new Boltzmann distribution determined (394), and the combined momentum difference between all incoming states and the facet's corresponding Boltzmann distribution (396) are computed.

The momentum difference is projected along the tangential direction of the facet (398). From the momentum difference and the Boltzmann distribution, the outgoing flux for the facet is computed to satisfy the perfect slip boundary condition (399), by satisfying zero tangential flux.

To account for skin friction and other factors, the outgoing flux distribution can be augmented with a skin friction component based on a product of the skin friction coefficient of the surface and a difference of the equilibrium portions of the outgoing and incoming particle fluxes. A more detailed description of applying skin friction and correction to different energy levels of lattice required for perfect mass and energy conservations are presented in the '260 patent and the '391 patent.

### 5. Move From Voxels to Voxels

Referring again to FIG. 5, particles are moved between voxels along the three-dimensional rectilinear lattice (284). This voxel to voxel movement is the only movement operation performed on voxels that do not interact with the facets (i.e., voxels that are not located near a surface). In typical simulations, voxels that are not located near enough to a surface to interact with the surface constitute a large majority of the voxels.

Each of the separate states represents particles moving along the lattice with integer speeds in each of the three dimensions: *x, y,* and *z*. The integer speeds include: 0, ±1, and ±2. The sign of the speed indicates the direction in which a particle is moving along the corresponding axis.

For voxels that do not interact with a surface, the move operation is computationally quite simple. The entire population of a state is moved from its current voxel to its destination voxel during every time increment. At the same time, the particles of the destination voxel are moved from that voxel to their own destination voxels. For example, an energy level 1 particle that is moving in the +1*x* and +1*y* direction (1, 0, 0) is moved from its current voxel to one that is +1 over in the x direction and 0 for other direction. The particle ends up at its destination voxel with the same state it had before the move (1,0,0). Interactions within the voxel will likely change the particle count for that state based on local interactions with other particles and surfaces. If not, the particle will continue to move along the lattice at the same speed and direction.

The move operation becomes slightly more complicated for voxels that interact with one or more surfaces. This can result in one or more fractional particles being transferred to a facet. Transfer of such fractional particles to a facet results in fractional particles remaining in the voxels. These fractional particles are transferred to a voxel occupied by the facet.

Referring to FIG. 11, when a portion 360 of the particles of a given state for a voxel 362 is moved to a facet 364 (278), the remaining portion 366 is moved to a voxel 368 in which the facet 364 is located and from which particles of the state are directed to the facet 364. Thus, if the state population equaled 25 and the volume of the parallelepiped overlapped with the voxel equaled 0.25 (i.e., a quarter of the voxel intersects the parallelepiped), then 6.25 particles would be moved to the facet 364 and 18.75 particles would be moved to the voxel 368 occupied by the facet 364. Because multiple facets could intersect a single voxel, the number of particles of a given state transferred to a voxel occupied by one or more facets is the related to the fraction of the volume of the voxel not overlapped by parallelepipeds of the intersecting facets (e.g., the number of particles transferred to the voxel equals the total number of incoming particles from the source voxel multiplied by the fraction of the voxel not overlapped by parallelepipeds of the intersecting facets).

### 6. Scatter From Facets to Voxels

Next, the outgoing particles from each facet are scattered to the voxels (286). Essentially, this scatter is the reverse of the gather by which particles were moved from the voxels to the facets. The number of particles of a given state that move from a facet to a voxel is proportional to the outgoing flux of particles from the facet multiplied by the ratio of the parallelepiped volume overlapping the voxel to the total parallelepiped volume. A proportionality factor accounting for the volume reduction of partial voxels can also be included. For each state, the total number of particles directed from the facets to a voxel is determined based on the sum of the particles moving from each facet to that voxel.

After scattering particles from the facets to the voxels, combining them with particles that have advected in from surrounding voxels, and integerizing the result, it is possible that certain directions in certain voxels may either underflow (become negative) or overflow (exceed 255 in an eight-bit implementation). This would result in either a gain or loss in mass, momentum and energy after these quantities are truncated to fit in the allowed range of values. To protect against such occurrences, the mass, momentum, and energy that are out of bounds are accumulated prior to truncation of the offending state. For the energy to which the state belongs, an amount of mass equal to the value gained (due to underflow) or lost (due to overflow) is added back to randomly (or sequentially) selected states having the same energy and that are not themselves subject to overflow or underflow. The additional momentum resulting from this addition of mass and energy is accumulated and added to the momentum from the truncation. By only adding mass to the same energy states, both mass and energy are corrected when the mass counter reaches zero. Finally, the momentum is corrected using pushing/pulling techniques until the momentum accumulator is returned to zero.

### 7. Perform Fluid Dynamics

Fluid dynamics are performed (288) FIG. 5. This may be referred to as microdynamics or intravoxel operations. Similarly, the advection procedure may be referred to as intervoxel operations. The microdynamics operations described below may also be used to collide particles at a facet to produce a Boltzmann distribution.

The fluid dynamics is ensured in the Lattice Boltzmann equation models by a particular collision operator known as the BGK collision model. This collision model mimics the dynamics of the distribution in a real fluid system. After the advection step, the conserved quantities of a fluid system, specifically the density, momentum and the energy are obtained from the distribution function. From these quantities, the equilibrium distribution function can be fully specified. The choice of the velocity vector set and the weights, together with the Lattice Boltzmann equation ensures that the macroscopic behavior obeys the correct hydrodynamic equation.

### Variable Resolution

Variable resolution (as discussed in U.S. Patent 10,360,324, which is hereby incorporated in its entirety) can also be employed and would use voxels of different sizes, e.g., coarse voxels and fine voxels, for different regions of the mesh according to regions of interest. For example, regions of interest can include fine voxels to resolve fluid dynamics at smaller scales and with higher resolution. Outside regions of interest, coarse voxels can be used in the mesh to reduce the number of computations without reducing the accuracy of the fluid flow simulation in the regions of interest. During a simulation of a physical process, particles may be advected between the regions having different resolutions.

### Examples

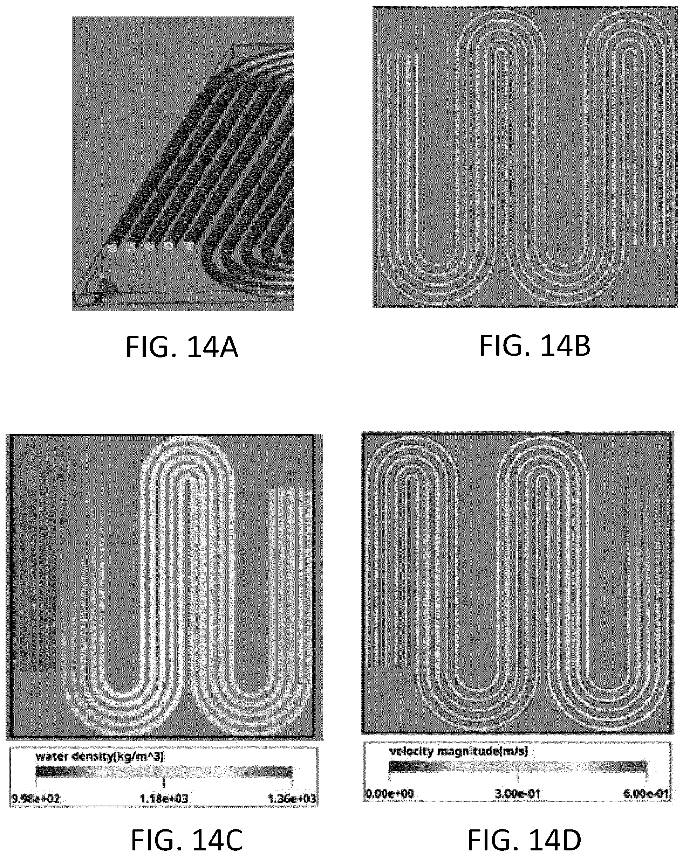

FIGS. 14A-14F show an example of a pressure driven water flow through the bipolar channel of a fuel cell. FIG. 14A shows an oblique view of the channel geometry, and FIG. 14B shows a top-down view of the geometry. The channel height is 0.01m. FIGS. 14C and 14D show the density and velocity contour, respectively, at steady state with an inlet velocity of 0.8m/s with flow from left to right. The simulation Mach number is set to 0.01, which was artificially increased from the real one, 5.33e-4. As shown in FIG. 14C, the density is nearly doubled through the channel. This is a clear example of the effects of artificial compressibility resulting from artificially increasing the simulation Mach number. With the constraint of mass flux conservation, the density variation results in the velocity variation shown in FIG. 14D. An almost invariant velocity field is expected in the flow direction along the long channel; however, excessive compressibility effects due to the increased simulation Mach number result in an increasing velocity in the flow direction along the length of the channel. These artificial compressibility effects result in less accurate flow field predictions.

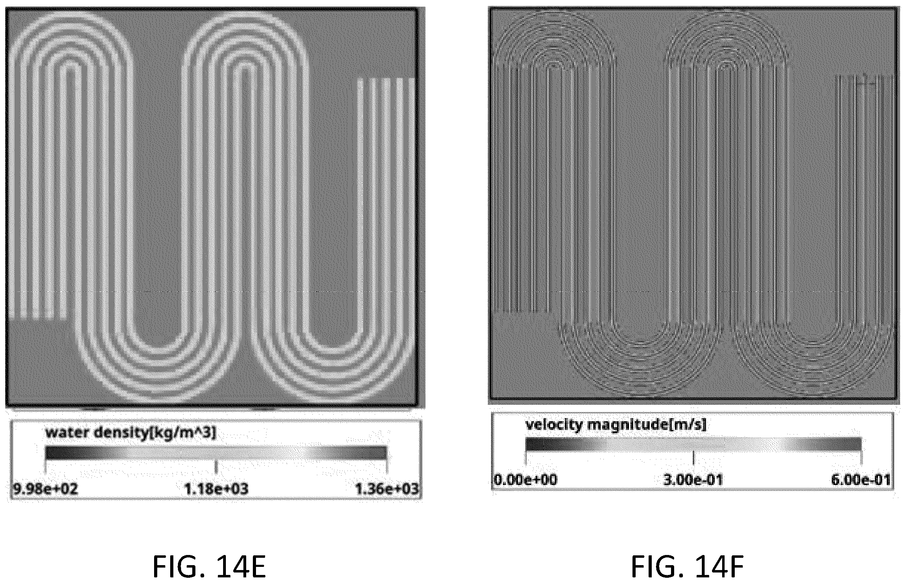

FIGS. 14E and 14F show improved simulation results for flow through the serpentine channels. The improved results are achieved by applying the process 100 (FIG. 2B). The density variation (FIG. 14E) and the velocity variation (FIG. 14F) are much smaller than the density and velocity variations in FIGS. 14C and 14D. The density (FIG. 14E) is nearly constant as expected for an incompressible fluid flow. Likewise, the velocity (FIG. 14F) is nearly constant along the flow direction with the expected transverse velocity variations resulting from no-slip boundary conditions applied at the channel walls.

Referring to FIGS. 2B, 5 and 13, the results of the processes 100, 270 and 390 can be used in manufacturing a physical structure, e.g., using one or more computer-controlled manufacturing systems. For example, the simulation can be used to optimize a shape of a physical object for improved fluid flow around or through the object. The optimized shape can be used as path planning data for computer-aided manufacturing processes to produce the optimized shape. Examples of shapes that can be optimized include flow paths for internal pipe or channel flows (e.g., for a liquid cooling system), nozzles and diffusers for wind tunnels, etc.

Alternatively, or additionally, the results of the fluid flow simulation of process 270 can be used to predict pressure head loss and/or velocity profiles of a fluid flowing through a pipe or channel. The results of the fluid flow simulation of process 270 can also be used to predict fluid flow through complex geometry such as a cooling system to predict thermal performance of the cooling system of the automobile, channels in a GDL of a fuel cell to predict fuel cell performance, or porous media such as carbonate rock to predict production of hydrocarbons from a subsurface reservoir. The techniques described herein improve the accuracy of such fluid flow simulations in predicting pressure head loss and/or velocity profiles of a fluid flowing through a pipe or channel, and/or predicting the thermal performance of a cooling system of an automobile.

Embodiments of the subject matter and the functional operations described in this specification can be implemented in digital electronic circuitry, tangibly embodied computer software or firmware, computer hardware (including the structures disclosed in this specification and their structural equivalents), or in combinations of one or more of them. Embodiments of the subject matter described in this specification can be implemented as one or more computer programs (i.e., one or more modules of computer program instructions encoded on a tangible non-transitory program carrier for execution by, or to control the operation of, data processing apparatus). The computer storage medium can be a machine-readable storage device, a machine-readable storage substrate, a random or serial access memory device, or a combination of one or more of them.

The term "data processing apparatus" refers to data processing hardware and encompasses all kinds of apparatus, devices, and machines for processing data, including by way of example, a programmable processor, a computer, or multiple processors or computers. The apparatus can also be or further include special purpose logic circuitry (e.g., an FPGA (field programmable gate array) or an ASIC (application-specific integrated circuit)). In addition to hardware, the apparatus can optionally include code that produces an execution environment for computer programs (e.g., code that constitutes processor firmware, a protocol stack, a database management system, an operating system, or a combination of one or more of them).

A computer program, which can also be referred to or described as a program, software, a software application, a module, a software module, a script, or code, can be written in any form of programming language, including compiled or interpreted languages, or declarative or procedural languages, and it can be deployed in any form, including as a stand-alone program or as a module, component, subroutine, or another unit suitable for use in a computing environment. A computer program may, but need not, correspond to a file in a file system. A program can be stored in a portion of a file that holds other programs or data (e.g., one or more scripts stored in a markup language document, in a single file dedicated to the program in question, or in multiple coordinated files (e.g., files that store one or more modules, subprograms, or portions of code)). A computer program can be deployed so that the program is executed on one computer or on multiple computers that are located at one site or distributed across multiple sites and interconnected by a data communication network.

Computers suitable for the execution of a computer program can be based on general or special purpose microprocessors, or both, or any other kind of central processing unit. Computer-readable media suitable for storing computer program instructions and data include all forms of non-volatile memory on media and memory devices, including by way of example semiconductor memory devices (e.g., EPROM, EEPROM, and flash memory devices), magnetic disks (e.g., internal hard disks or removable disks), magneto-optical disks, and CD-ROM and DVD-ROM disks. The processor and the memory can be supplemented by, or incorporated in, special purpose logic circuitry.

Embodiments of the subject matter described in this specification can be implemented in a computing system that includes a back-end component (e.g., as a data server), or that includes a middleware component (e.g., an application server), or that includes a front-end component (e.g., a client computer having a graphical user interface or a web browser through which a user can interact with an implementation of the subject matter described in this specification), or any combination of one or more such back-end, middleware, or front-end components. The components of the system can be interconnected by any form or medium of digital data communication (e.g., a communication network). Examples of communication networks include a local area network (LAN) and a wide area network (WAN) (e.g., the Internet).

The computing system can include clients and servers. A client and server are generally remote from each other and typically interact through a communication network. The relationship of client and server arises by virtue of computer programs running on the respective computers and having a client-server relationship to each other. In some embodiments, a server transmits data (e.g., an HTML page) to a user device (e.g., for purposes of displaying data to and receiving user input from a user interacting with the user device), which acts as a client. Data generated at the user device (e.g., a result of the user interaction) can be received from the user device at the server.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing can be advantageous.

### EMBODIMENTS

Although the present invention is defined in the claims, it should be understood that the present invention can also (alternatively) be defined in accordance with the following embodiments:
1. A computer system for digitally simulating a fluid flow in a three-dimensional computer-aided design (CAD) model of a simulation space, the computer system comprising:
   one or more processors; and
   a memory including:
      a mesh preparation engine for generating and storing a digital representation of a simulation space based on a digital three-dimensional CAD model, the digital representation including a mesh comprising a plurality of voxels; and
      a simulation engine for reading, from the mesh preparation engine, the digital representation of the mesh in the simulation space,
      with the simulation engine storing instructions for digitally simulating a fluid flow, the instructions, when executed by the one or more processors, cause the one or more processors to perform operations comprising:
         reading, from the mesh preparation engine, the digital representation of the mesh in the simulation space;
         digitally simulating a first fluid flow by applying a driving force to the plurality of voxels in the digital representation of the mesh in the simulation space to generate a digital pressure field;
         determining a digital volumetric body force to apply to the plurality of voxels based on a pressure gradient of the digital pressure field; and
         digitally simulating a second fluid flow by applying the digital volumetric body force to the plurality of voxels.
2. The computer system of embodiment 1, wherein the first fluid flow and the second fluid flow comprise incompressible, steady state fluid flows.
3. The computer system of embodiment 1, wherein the digital volumetric body force comprises a digital conformal volumetric body force aligned with a streamwise direction.
4. The computer system of embodiment 1, wherein a density variation of the second fluid flow is less than a density variation of the first fluid flow.
5. The computer system of embodiment 1, wherein the instructions further comprise determining a realized pressure force for the second fluid flow based on the driving force from the first fluid flow and a measured pressure force from the second fluid flow.
6. The computer system of embodiment 1, wherein a number of voxels used in simulating the first fluid flow is different than a number of voxels used in simulating the second fluid flow.
7. The computer system of embodiment 1, wherein the instructions further comprise storing the pressure field and the volumetric body force in a hardware storage device for use in subsequent simulations of fluid flow.
8. The computer system of embodiment 1, wherein the pressure field comprises a force balance based on the driving force, fluid inertia, and friction forces at solid boundaries in the simulation space.
9. The computer system of embodiment 1, further comprising:
   storing in the memory the digital pressure field generated by digitally simulating the first fluid flow by applying the driving force to the plurality of voxels in the digital representation of the mesh in the simulation space;
   storing in the memory the digital volumetric body force to apply to the plurality of voxels, the digital volumetric body force determined based on the pressure gradient of the digital pressure field; and
   storing in the memory results of a digital simulation of the second fluid flow generated by digitally simulating the second fluid flow by applying the digital volumetric body force to the plurality of voxels.
10. A method implemented by a data processing system for digitally simulating a fluid flow in a three-dimensional computer-aided design (CAD) model of a simulation space, the method comprising:
   receiving, by a data processing system, a digital representation of a simulation space based on a digital three-dimensional CAD model, the digital representation including a plurality of voxels;
   digitally simulating, by the data processing system, a first fluid flow by applying a driving force to the plurality of voxels in the digital representation of the simulation space to generate a pressure field;
   determining, by the data processing system, a volumetric body force to apply to the plurality of voxels based on a pressure gradient of the pressure field; and
   digitally simulating, by the data processing system, a second fluid flow by applying the volumetric body force to the plurality of voxels.
11. The method of embodiment 10, wherein the first fluid flow and the second fluid flow comprise incompressible, steady state fluid flows.
12. The method of embodiment 10, wherein the volumetric body force comprises a conformal volumetric body force aligned with a streamwise direction.
13. The method of embodiment 10, wherein a density variation of the second fluid flow is less than a density variation of the first fluid flow.
14. The method of embodiment 10, further comprising determining a realized pressure force for the second fluid flow based on the driving force from the first fluid flow and a measured pressure force from the second fluid flow.
15. The method of embodiment 10, wherein a number of voxels used in simulating the first fluid flow is different than a number of voxels used in simulating the second fluid flow.
16. The method of embodiment 10, further comprising: storing the pressure field and the volumetric body force in a hardware storage device for use in subsequent simulations of fluid flow.
17. One or more non-transitory machine-readable storage devices storing instructions for digitally simulating a fluid flow in a three-dimensional computer-aided design (CAD) model of a simulation space, the instructions being executable by one or more processors, to cause performance of operations comprising:
   receiving a digital representation of a simulation space based on a digital three-dimensional CAD model, the digital representation including a plurality of voxels;
   digitally simulating a first fluid flow by applying a driving force to the plurality of voxels in the digital representation of the simulation space to generate a pressure field;
   determining a volumetric body force to apply to the plurality of voxels based on a pressure gradient of the pressure field; and
   digitally simulating a second fluid flow by applying the volumetric body force to the plurality of voxels.
18. The one or more non-transitory machine-readable storage devices of embodiment 17, wherein the first fluid flow and the second fluid flow comprise incompressible, steady state fluid flows, and
   wherein a density variation of the second fluid flow is less than a density variation of the first fluid flow.
19. The one or more non-transitory machine-readable storage devices of embodiment 17, wherein the volumetric body force comprises a conformal volumetric body force aligned with a streamwise direction.
20. The one or more non-transitory machine-readable storage devices of embodiment 17, wherein the instructions further comprise determining a realized pressure force for the second fluid flow based on the driving force from the first fluid flow and a measured pressure force from the second fluid flow.

## Claims

1. A computer system for digitally simulating a fluid flow in a three-dimensional computer-aided design (CAD) model of a simulation space, the computer system comprising:
one or more processors; and
a memory including:
a mesh preparation engine for generating and storing a digital representation of a simulation space based on a digital three-dimensional CAD model, the digital representation including a mesh comprising a plurality of voxels; and
a simulation engine for reading, from the mesh preparation engine, the digital representation of the mesh in the simulation space,
with the simulation engine storing instructions for digitally simulating a fluid flow, the instructions, when executed by the one or more processors, cause the one or more processors to perform operations comprising:
reading, from the mesh preparation engine, the digital representation of the mesh in the simulation space;
digitally simulating a first fluid flow by applying a driving force to the plurality of voxels in the digital representation of the mesh in the simulation space to generate a digital pressure field;
determining a digital volumetric body force to apply to the plurality of voxels based on a pressure gradient of the digital pressure field; and
digitally simulating a second fluid flow by applying the digital volumetric body force to the plurality of voxels.

2. The computer system of claim 1, wherein the first fluid flow and the second fluid flow comprise incompressible, steady state fluid flows.

3. The computer system of claim 1, wherein the digital volumetric body force comprises a digital conformal volumetric body force aligned with a streamwise direction.

4. The computer system of claim 1, wherein a density variation of the second fluid flow is less than a density variation of the first fluid flow.

5. The computer system of claim 1, wherein the instructions further comprise determining a realized pressure force for the second fluid flow based on the driving force from the first fluid flow and a measured pressure force from the second fluid flow.

6. The computer system of claim 1, wherein a number of voxels used in simulating the first fluid flow is different than a number of voxels used in simulating the second fluid flow.

7. The computer system of claim 1, wherein the instructions further comprise storing the pressure field and the volumetric body force in a hardware storage device for use in subsequent simulations of fluid flow.

8. The computer system of claim 1, wherein the pressure field comprises a force balance based on the driving force, fluid inertia, and friction forces at solid boundaries in the simulation space.

9. The computer system of claim 1, further comprising:
storing in the memory the digital pressure field generated by digitally simulating the first fluid flow by applying the driving force to the plurality of voxels in the digital representation of the mesh in the simulation space;
storing in the memory the digital volumetric body force to apply to the plurality of voxels, the digital volumetric body force determined based on the pressure gradient of the digital pressure field; and
storing in the memory results of a digital simulation of the second fluid flow generated by digitally simulating the second fluid flow by applying the digital volumetric body force to the plurality of voxels.

10. A method implemented by a data processing system for digitally simulating a fluid flow in a three-dimensional computer-aided design (CAD) model of a simulation space, the method comprising:
receiving, by a data processing system, a digital representation of a simulation space based on a digital three-dimensional CAD model, the digital representation including a plurality of voxels;
digitally simulating, by the data processing system, a first fluid flow by applying a driving force to the plurality of voxels in the digital representation of the simulation space to generate a pressure field;
determining, by the data processing system, a volumetric body force to apply to the plurality of voxels based on a pressure gradient of the pressure field; and
digitally simulating, by the data processing system, a second fluid flow by applying the volumetric body force to the plurality of voxels.

11. The method of claim 10, wherein the first fluid flow and the second fluid flow comprise incompressible, steady state fluid flows.

12. The method of claim 10, wherein the volumetric body force comprises a conformal volumetric body force aligned with a streamwise direction.

13. The method of claim 10, wherein a density variation of the second fluid flow is less than a density variation of the first fluid flow and/or wherein a number of voxels used in simulating the first fluid flow is different than a number of voxels used in simulating the second fluid flow.

14. The method of claim 10, further comprising: determining a realized pressure force for the second fluid flow based on the driving force from the first fluid flow and a measured pressure force from the second fluid flow; and/or storing the pressure field and the volumetric body force in a hardware storage device for use in subsequent simulations of fluid flow.

15. One or more non-transitory machine-readable storage devices storing instructions for digitally simulating a fluid flow in a three-dimensional computer-aided design (CAD) model of a simulation space, the instructions being executable by one or more processors, to cause performance of operations comprising the method of any one of claims 10 to 14.
